# EUROPEAN PATENT APPLICATION

(11) **EP 3 848 327 A1**
(43) Date of publication of application: **14.07.2021**
(21) Application number: 19936548.7
(22) Date of filing: 20.12.2019
(51) Int. Cl.: B66F 17/00

(54) **ANTI-EXTRUSION DEVICE FOR MOVABLE OPERATING PLATFORM, PUSH-ROD-TYPE ANTI-EXTRUSION DEVICE, AND HIGH-ALTITUDE OPERATION MACHINE**

(30) Priority: 30.09.2019 CN 201910941318; 30.09.2019 CN 201910941314
(71) Applicant: Zoomlion Intelligent Access Machinery Co., Ltd., Changsha, Hunan 410010 (CN)
(72) Inventor: The designation of the inventor has not yet been filed
(74) Representative: Ström & Gulliksson AB
(86) International application number: PCT/CN2019/126986
(87) International publication number: WO 2021/062952

(57) **Abstract**

The present invention relates to a safety protection device, in particular discloses an anti-squeezing device for mobile console, which comprises: an opening/closing mechanism pivotally mounted in the area of an operating desktop (13) of the mobile console and capable of pivotally opening from a closed state in a direction away from the operator in response to the squeezing thrust of the operator so as to form a dodging space (11); and a position signal detection mechanism mounted to detect and transmit an opening/closing position signal of the opening/closing mechanism, so that a control unit of the mobile console may perform control operations based on the opening/closing position signal. In addition, the present invention further discloses to an application-specific pusher-type anti-squeezing device for mobile console and an aerial work machine. The anti-squeezing device provided by the present invention can provide an effective dodging space while performing anti-squeezing operation, and has the advantages of wide protection angle range, high safety and high stability.

## Description

### FIELD

The present invention relates to a safety protection device, in particular to an anti-squeezing device for mobile console. In addition, the present invention further relates to an application-specific pusher-type anti-squeezing device for mobile console and an aerial work machine.

### BACKGROUND

The safety protection of mobile consoles, e.g., typically the operating platforms of aerial work machines, the operating consoles or the driving or operating instrument console areas of ground mobile working vehicles, the operating console areas of mobile working equipment inside plants, etc., is very important.

The above-mentioned equipment or vehicles may cause huge crushing injuries to the operators in the mobile console or even casualties when they move backward or reverse if large-size obstacles behind them are not noticed or there are accidental falling objects behind them in the process of operation or construction owing to the complex working environment. For example, if an aerial work machine (e.g., tower crane, elevator, etc.) is operated carelessly without noticing the obstacles behind the machine in the moving process of the mobile working platform, the operator may be squeezed and injured by the surrounding obstacles during operation.

In order to prevent the above-mentioned accidents or misoperations and reduce or avoid the injury to the operator, those skilled in the art have employed a variety of anti-squeezing technical schemes. For example, some anti-squeezing devices for mobile console have been disclosed in existing technical documents WO2018089965A1, CN103380075B, CN107265365A, CN204185196U, CN105307971B, CN105339295B, FR3008404B1, CN108367902A, and US9676602, etc. The anti-squeezing devices for mobile console in the prior art generally include the following types: (1) a flexible rope associated with a magnetic cut-off switch, in which the magnetic cut-off switch cuts off the circuit when the operator is subject to squeezing; (2) a push switch, which sends a signal and a rigid rod drops at the same time when the pressure reaches a set value; (3) an infrared laser sensor, which sends a signal when the light is blocked; (4) a high guard railing arranged on the back for physical protection of some spaces; (5) a pressure-sensitive cut-off switch triggered by squeezing for protection; (6) a rain hood with a rigid pressure-sensitive member, etc. In addition, in the prior art, there are anti-squeezing technical schemes for triggering an alarm or stopping the operation of the equipment by moving or rotating a rigid rod entirely.

However, none of the above-mentioned anti-squeezing devices in the prior art can attain a good protective effect in actual applications, and some of them even affect the normal operation or cause more serious squeezing injuries.

For example, for an anti-squeezing device employing a flexible rope associated with a magnetic cut-off switch or an anti-squeezing device employing an infrared laser sensor, the working equipment will automatically stop, if the operator's action range is slightly excessively wide or his body is slightly out of balance, which will seriously affect the normal construction operation . In order to avoid troubles, some operators often do not re-adsorb the cut-off switch to the magnet after the cut-off switch drops off, or even pull out the cut-off switch by themselves or manually modify the transmitter or receiver of the infrared laser sensor to a different orientation. Consequently, the anti-squeezing device fails to play a protective role in the event of an obstacle squeezing accident.

For another example, for an anti-squeezing device employing a push switch in which the rigid rod automatically drops when the pressure reaches a set value or an anti-squeezing device employing a pressure-sensitive cut-off switch triggered by squeezing, firstly, such a mechanism utilizes pressure detection in nature. When the operator is hit by an external obstacle, the instantaneous impact force will cause great harm to the operator, and the squeezing pressure often reaches a maximum value instantaneously. Although the pressure detection mechanism can stop the equipment when the pressure reaches a set value, it is essentially a rigid pressure-bearing structure, and the instantaneous peak of squeezing or impact force is often much greater than the set value and causes great harm to the operator; secondly, when such an anti-squeezing device reaches the set value of pressure, the rigid rod usually falls off automatically. The accidental injury caused by such a falling object on the aerial work machine to the personnel on the ground is serious sometimes.

For another example, if a high protective railing is arranged behind the operator or an anti-squeezing device employing a rain hood or similar component is used, such an anti-squeezing device employs a relatively rough and raw rigid protective structure technically. When the operator is hit by an obstacle behind him/her, the instantaneous impact force will cause the operator to be out of balance, and the operator can't perform braking operation in time, while the mobile machine or equipment still moves. Eventually the protective railing or rain hood will be deformed and damaged, and may cause serious harm to the operator. Such a mechanical protection structure can't actively avoid further squeezing in the event of impact, and eventually not only the operator but also the entire equipment or machine will be harmed severely. If the impact force of the obstacle behind the operator on the working equipment is great, the rain hood or protective railing will often be deformed seriously, and the operator will be clamped between the operating instrument table and the protective railing. Consequently, the possibility of escape of the operator is lost.

Finally, for some anti-squeezing devices that trigger an alarm or stop the operation of the equipment by means of the movement or rotation of the entire rigid rod in the prior art, a severe problem of such a mechanism is that the protection angle range is small, and the safety and stability are poor. Since a rigid rod is used, if the angle of the impact force deviates from the stress direction required by the movement or rotation of the rigid rod, the rigid rod often gets stuck or moves poorly, which is fatal in the case of high impact force of the obstacle, and the operator will be squeezed back and forth by the rigid rod and the obstacle behind him/her and harmed more seriously. Besides, the design of movement direction of some rigid rods is unreasonable. In the initial stage of movement, some rigid rods even occupy the dodging space of the operator, causing serious harm to the operator in the initial stage of impact. Moreover, the rigid rod of such a mechanism moves or rotates entirely. The rigid rod is easy to move if the stress direction is appropriate. However, in the actual operation process, the unintentional action or touch by the operator often causes the rigid rod to move or rotate entirely, which leads to alarming or stop of the equipment and affects the normal operation.

Based on the above analysis of various anti-squeezing devices in the prior art, it can be seen: although various anti-squeezing devices have been designed by those skilled in the art, the protection effect of those anti-squeezing devices is not ideal, and some anti-squeezing devices even affect the normal construction operation or cause more serious consequences of squeezing injury. Moreover, most of them have complex structure, high cost, high failure rate, and low stability, and may block out the sight; and some of them have a limited protection range, and can't make response to the squeezing situation of the operator timely. Owing to those defects, operators, especially operators of aerial work machines, are endangered. However, those defects haven't been effectively solved them for long, and have become technical problems that restrict the development of mobile working equipment or machines (especially aerial work machines). With the development of infrastructure and industrialization, construction accidents caused by those defects increase year by year, resulting in huge loss of life and property.

In view of the above problems, it is necessary to design a novel anti-squeezing device that can overcome, effectively solve or alleviate the above technical problems.

### SUMMARY

The basic technical problem to be solved by the present invention is to provide an anti-squeezing device for mobile console, which can provide an effective dodging space while performing anti-squeezing operation, and has the advantages of wide protection angle range, high safety and high stability.

Furthermore, a technical problem to be solved by the present invention is to provide an anti-squeezing device for a mobile console, which not only can provide an effective dodging space while performing anti-squeezing operation and has advantages of wide protection angle range, high safety and high stability, but also can effectively prevent misoperation.

Another technical problem to be solved by the present invention is to provide a pusher-type anti-squeezing device for mobile console, which not only can provide an effective dodging space while performing anti-squeezing operation by means of a simple structure and has advantages of wide protection angle range, high safety and high stability, but also can effectively prevent misoperation.

In addition, another technical problem to be solved by the present invention is to provide an aerial work machine, which has a working platform that can effectively prevent squeezing, has a wide protection angle range, high safety and high stability, and can effectively prevent misoperation.

In order to solve the above technical problems, the present invention provides an anti-squeezing device for mobile console, which comprises: an opening/closing mechanism pivotally mounted in the area of an operating desktop of the mobile console and capable of pivotally opening from a closed state in a direction away from the operator in response to the squeezing thrust of the operator so as to form an dodging space; and a position signal detection mechanism mounted to detect and transmit an opening/closing position signal of the opening/closing mechanism, so that a control unit of the mobile console may perform control operations based on the opening/closing position signal.

Optionally, the opening/closing mechanism is a single opening/closing mechanism comprising a single opening/closing member, one of the left side and right side of the operating desktop is hinged with one end of the opening/closing member, the other one of the left side and right side of the operating desktop is arranged from the other end of the opening/closing member at spacing that is not enough for the body of the operator to pass through; or the opening/closing mechanism is a split opening/closing mechanism comprising a pair of opening/closing members, and the left side and right side of the operating desktop are respectively hinged with the opening/closing member.

Specifically, the opening/closing member is a separate member fixed on a pivotal structural member of the opening/closing mechanism; or the opening/closing member is formed as a part of a pivotal structural member of the opening/closing mechanism.

As an optional specific structural form, the opening/closing mechanism is the split opening/closing mechanism, wherein the pair of opening/closing members are correspondingly hinged on guardrails on the left side and right side of the operating desktop; or a mounting bracket is projected and fixed on the respective guardrails on the left side and right side of the operating desktop, and the opening/closing members are hinged to the corresponding mounting brackets; or a mounting bracket which is pivotable is mounted on the respective guardrails on the left side and right side of the operating desktop, and the opening/closing members are fixed to or integrated with the corresponding mounting brackets.

Optionally, the pivot axis of the opening/closing mechanism is a vertical axis, a horizontal axis or an axis having an included angle with the horizontal plane.

As a preferred scheme, the position signal detection mechanism comprises a warning signal detection device and an operation signal detection device, wherein the warning signal detection device transmits a warning position signal when the opening/closing mechanism moves to a warning position, and the control unit controls an alarm device to alarm; and the operation signal detection device transmits a dangerous position signal when the opening/closing mechanism further moves to a dangerous position, and the control unit controls the mobile console to brake or move toward a safe direction.

More preferably, the warning signal detection device and the operation signal detection device comprise a warning signal trigger element, an operation signal trigger element and an inductive transmission element for sensing and transmitting an induction signal, wherein the warning signal trigger element and the operation signal trigger element are mounted on the opening/closing member of the opening/closing mechanism so that they can move along with the opening/closing member, the inductive transmission element is mounted on the operating desktop or a member connected around the operating desktop corresponding to the warning signal triggering element and the operating signal triggering element, and is electrically connected to the control unit.

As a particularly preferred structural form, the anti-squeezing device for mobile console further comprises an elastic damping element mounted corresponding to the opening/closing member of the opening/closing mechanism and preset to have elastic force to keep the opening/closing mechanism in a closed state or reset the opening/closing mechanism to the closed state.

As a separate application-specific technical scheme of the above-mentioned anti-squeezing device for mobile console, the present invention further provides a pusher-type anti-squeezing device for mobile console, which comprises: a pusher mechanism comprising at least one main pusher that is pivotally mounted in the area of an operating desktop of the mobile console to have a movable end rotatable with respect to a pivotal hinge point and the main pusher is capable of driving a pressed section of the main pusher to pivot from an initial state in a direction away from the operator in response to the squeezing thrust of the operator so as to form a dodging space; and a position signal detection mechanism mounted to detect and transmit a pivotal position signal of the main pusher, so that a control unit of the mobile console may perform control operations based on the pivotal position signal.

Optionally, the main pusher is a separate member fixed on a pivotal structural member of the pusher mechanism; or the main pusher is formed as a part of a pivotal structural member of the pusher mechanism.

Specifically, the pivotal hinge point of the main pusher is arranged in an edge area of the operating desktop area, so as to facilitate the operator to touch the pressed section of the main pusher when being squeezed.

Optionally, the pusher mechanism comprises a single main pusher, one of the left side and right side of the operating desktop is hinged with one end of the main pusher, and the other one of the left side and right side of the operating desktop is arranged from the other end of the main pusher at a spacing that is not enough for the body of the operator to pass through; or the pusher mechanism comprises a pair of main pushers, and the left side and right side of the operating desktop are respectively hinged with the main pushers.

As an optional specific structural form, the pusher mechanism comprises a pair of main pushers, wherein the pair of main pushers are correspondingly hinged on guardrails on the left side and right side of the operating desktop; or a mounting bracket is projected and fixed on the respective guardrails on the left side and right side of the operating desktop, and the main pushers are hinged to the corresponding mounting brackets; or a mounting bracket which is pivotable is mounted on the respective guardrails on the left side and right side of the operating desktop, and the main pushers are fixed to or integrated with the corresponding mounting brackets.

Preferably, the movable ends of the pair of main pushers on the two sides are opposite to each other in the initial state, wherein the movable ends are arranged as follows: the movable ends are in contact with each other or have a spacing that is not enough for the body of the operator to pass through therebetween; or a balance guide pusher is connected between the movable ends of the main pushers, the left and right sections of the balance guide pusher are respectively provided with a movable guide structure, and the movable ends are slidably connected with the corresponding movable guide structures.

More preferably, the movable ends are arranged to be in contact with each other or have a spacing that is not enough for the body of the operator to pass through therebetween, the two sides of the operating desktop are respectively provided with a limit stop corresponding to the hinged end of the corresponding main pusher, and the limit stops limit the movable ends of the main pushers on the two sides in opposite positions in the initial state; or the movable ends of the main pushers are connected therebetween with the balance guide pusher, and the movable guiding structure of the left and right sections of the balance guide pusher is a sliding groove in the length direction, the movable end is slidably connected with the corresponding sliding groove via a sliding pin connection assembly, the movable ends of the pair of main pushers on the two sides are at the ends of the corresponding sliding grooves that are near the center of the balance guide pusher so as to limit the initial positions of the main pushers and can slide toward the other ends of the corresponding sliding grooves in the opening process.

Optionally, the pivot axis of the pusher mechanism is a vertical axis, a horizontal axis or an axis having an included angle with the horizontal plane.

As a preferred scheme, the position signal detection mechanism comprises a warning signal detection device and an operation signal detection device, wherein the warning signal detection device transmits a warning position signal when the main pusher pivots to a warning position, and the control unit controls an alarm device to alarm; and the operation signal detection device transmits a dangerous position signal when the main pusher further moves to a dangerous position, and the control unit controls the mobile console to brake or move toward a safe direction.

More preferably, the warning signal detection device and the operation signal detection device comprise a warning signal trigger element, an operation signal trigger element and an inductive transmission element for sensing and transmitting an induction signal, wherein the warning signal trigger element and the operation signal trigger element are mounted on the main pusher so that they can move along with the main pusher, the inductive transmission element is mounted on the operating desktop or a member connected around the operating desktop corresponding to the warning signal triggering element and the operating signal triggering element and is electrically connected to the control unit.

Specifically, the warning signal trigger element and the operation signal trigger element are one of limit switches, proximity switches, pull switches, contact switches and laser ranging elements, and the inductive transmission element is a sensor associated to the warning signal trigger element and the operation signal trigger element.

As a particularly preferred structural form, the pusher-type anti-squeezing device for mobile console further comprises an elastic damping element mounted corresponding to the main pusher and preset to have elastic force to keep the main pusher in the initial state or reset the main pusher to the initial state.

Preferably, the pivotal structural member of the pusher mechanism is an elastic hinge, an elastic member of the elastic hinge forms the elastic damping element; or the elastic damping element is a torsion spring, spring or elastic rubber arranged on the pivotal structural member.

On the basis of the technical scheme of the above-mentioned anti-squeezing device for mobile console, the present invention further provides an aerial work machine, which comprises the anti-squeezing device for mobile console or the pusher-type anti-squeezing device for mobile console according to any of the above technical schemes.

With the above basic technical scheme, the anti-squeezing device for mobile console in the present invention has an innovative pivotal opening/closing mechanism, and the opening/closing member of the pivotal opening/closing mechanism is characterized in that one end or one side of the opening/closing member is a movable end or movable side. Owing to the fact that the movable end or movable side of the opening/closing member of the pivotal opening/closing mechanism in the present invention is a free end or free side in nature (at least belongs to a movable guide end or movable guide side in the case that a balance connecting member exists), the opening/closing member of the opening/closing mechanism has certain structural flexibility thanks to the existence of such a free end or free side. By virtue of the innovative application of the pivotal opening/closing mechanism in the present invention in the anti-squeezing device for mobile console, the above-mentioned long-standing technical problems in the art are solved. Specifically, the pivotal opening/closing mechanism in the present invention belongs to a push-type mechanism in the form of movement. Thus, when the operator is squeezed and consequently presses and touches the opening/closing member of the opening/closing mechanism, the opening/closing member will form a structural space similar to the case that a door is pushed open, so that the control unit of the anti-squeezing device receives a signal and performs anti-squeezing operation, while providing an effective dodging space for the operator. Since the opening/closing member of the pivotal opening/closing mechanism rotates around a hinged pivotal shaft, it actually forms a stress mechanism similar to a lever. In addition, the opening/closing member of the opening/closing mechanism has certain structural flexibility owing to the existence of the free end or free side of the opening/closing member. With such a structural characteristic, the opening/closing member has looser requirements for the stress direction, and basically can effectively open and pivot in the stress direction of the squeezing pressure from the operator under different dangerous conditions, thus provides a dodging space and forms a spatial position change signal. In some extreme cases, even if the impact speed is high, the opening/closing member can effectively buffer the pressure of the operator since the operator impacts the opening/closing member instantly and the opening/closing member has certain flexibility. Thus, the anti-squeezing device can protect the operator, avoid the harm to the operator caused by the operator's instantaneous rigid impact on the rigid rod in the prior art, and avoid the defect that some rigid rods encroach on the operator's movement space during position change in the prior art.

More particularly, the pusher-type anti-squeezing device for mobile console in the present invention employs a pivotal pusher mechanism, and the main pusher of the pivotal pusher mechanism is characterized in that one end or one side of the main pusher is a movable end or movable side. Owing to the fact that the movable end or movable side of the main pusher of the pivotal pusher mechanism in the present invention is a free end or free side in nature (at least belongs to a movable guide end or movable guide side in the case that a balance connecting member exists), the main pusher of the pusher mechanism has certain structural flexibility thanks to the existence of such a free end or free side. By virtue of the innovative application of the pivotal pusher mechanism in the present invention in the anti-squeezing device for mobile console, the above-mentioned long-standing technical problems in the art are solved. Specifically, the pivotal pusher mechanism in the present invention belongs to a push-type mechanism in the form of movement. Thus, when the operator is squeezed and consequently presses and touches the main pusher of the pusher mechanism, the main pusher of the pusher mechanism have certain structural flexibility owing to the existence of the free end or free side of the main pusher. With such a structural characteristic, the main pusher has looser requirements on the stress direction, and basically can effectively open and pivot in the stress direction of the squeezing pressure from the operator under different dangerous conditions, thus provides a dodging space and forms a spatial position change signal. In some extreme cases, even if the impact speed is high, the main pusher can effectively buffer the pressure of the operator since the operator impacts the main pusher instantly and the main pusher has certain flexibility, Thus, the anti-squeezing device can protect the operator, avoid the harm to the operator caused by the operator's rigid impact on the rigid rod instantaneously in the prior art, and avoid the defect that some rigid rods encroach on the operator's movement space during position change in the prior art. Therefore, the pusher-type anti-squeezing device for mobile console in the present invention has a greater protection angle range, higher safety and better stability, and can effectively provide a dodging space for the operator while performing anti-squeezing operation.

In addition, in a preferred technical scheme of the anti-squeezing device for mobile console in the present invention, the anti-squeezing device for mobile console employs two-level signals, in which the signal at the first level is a warning signal, and the signal at the second level is an operation signal for controlling the braking or reversed movement of the mobile console, so that the control unit of the mobile console can make judgments hierarchically on the control operation of the mobile console, thus avoiding affecting the normal operation of the mobile console owing to misoperations.

Especially, in a more innovative preferred technical scheme of the present invention, the anti-squeezing device for mobile console in the present invention employs an elastic damping element. With such an elastic damping element (especially an elastic hinge), the opening/closing member also has elasticity at the pivotal axis position. Thus, the requirement of the opening/closing member on the stress direction is looser. Basically the opening/closing member can effectively open and pivot in all stress directions of the squeezing pressure of the operator under different dangerous conditions; besides, owing to existence of the preset elastic force of the elastic damping element, the opening/closing member will not pivot easily against the resistance of the elastic force in a case that the operator touches the opening/closing member or the main pusher by mistake; instead, the operator has to exert certain pressure to overcome the elastic resistance of the elastic damping element so as to make the opening/closing member to pivot. Such a technical scheme can effectively prevent accidental misoperations of the operator. Accidental misoperations, redundant actions and unintentional actions are basically slight ones. When the operator touches the opening/closing member by mistake, he/she will feel the existence of the elastic resistance in time, thus correct his/her misoperations, redundant actions or unintentional actions in time. In that way, the misoperations of the operator can be prevented basically, the operating stability of the mobile console is effectively improved, and the normal operation of the mobile console is ensured.

Other features and advantages of the present invention will be further detailed in the embodiments hereunder.

### BRIEF DESCRITION OF THE DRAWINGS

The accompanying drawings are provided to make the present invention understood better and constitute a part of the patent specification, and are used in conjunction with the embodiments described below to interpret the present invention; however, the protected domain of the present invention is not limited to the accompanying drawings and embodiments. In the figures:
Fig. 1 is a schematic diagram of the overall structure of the anti-squeezing device according to a first embodiment of the present invention, wherein the opening/closing mechanism is in a closed state;
Fig. 2 is a schematic diagram of the overall structure of the anti-squeezing device according to the embodiment shown in Fig. 1, wherein the opening/closing mechanism is in an open state;
Fig. 3 is a schematic diagram of the overall structure of the anti-squeezing device according to the embodiment shown in Fig. 1, illustrating the positional arrangement of the signal elements from another viewing angle;
Fig. 4 is a schematic structural diagram of the assembly of the elastic damping element and the pivotal member of the anti-squeezing device according to an embodiment of the present invention, which forms an elastic hinge;
Fig. 5 is a schematic diagram of the overall structure of the anti-squeezing device according to a second embodiment of the present invention, wherein the opening/closing mechanism is in a closed state;
Fig. 6 is a schematic diagram of the overall structure of the anti-squeezing device according to the embodiment shown in Fig. 5, wherein the opening/closing mechanism is in an open state;
Fig. 7 is a schematic diagram of the overall structure of the anti-squeezing device according to the embodiment shown in Fig. 5, illustrating the positional arrangement of the signal elements from another viewing angle;
Fig. 8 is a schematic diagram of the circuit employed by the position signal detection mechanism of the anti-squeezing device according to the present invention.

**Reference Numbers:**

| | | | |
|---|---|---|---|
| 1 - | mounting bracket; | 2 - | elastic hinge; |
| 3 - | balance guide pusher; | 4 - | main pusher; |
| 5 - | warning signal trigger element; | 6 - | operation signal trigger element; |
| 7 - | inductive transmission element; | 8 - | sliding pin connection assembly; |
| 9 - | sliding groove; | 10 - | limit stop; |
| 11 - | dodging space; | 12 - | movable end; |
| 13 - | operating desktop; | 14 - | guardrail; |
| 15 - | hinge member; | 16 - | mounting hole; |
| 17 - | elastic damping element; | 18 - | control unit |

### DETAILED DESCRPTION

Hereunder the present invention will be detailed in embodiments, with reference to the accompanying drawings. However, it should be appreciated that the embodiments described here are only provided for explain and interpret the present invention, and the protected domain of the present invention is not limited to these embodiments.

First of all, it should be noted that the mobile consoles in the present invention generally refers to the stations or areas on various machines or equipment for the operators to control, drive and operate, including but not limited to operating platforms of aerial work machines, central consoles of concrete equipment, driving and operating areas of forklifts used in plants or other occasions, etc. All of such machines and equipment should be deemed as falling in the scope of protection of the present invention, as long as they have the above-mentioned mobile consoles and employs the technical scheme of the anti-squeezing device in the present invention.

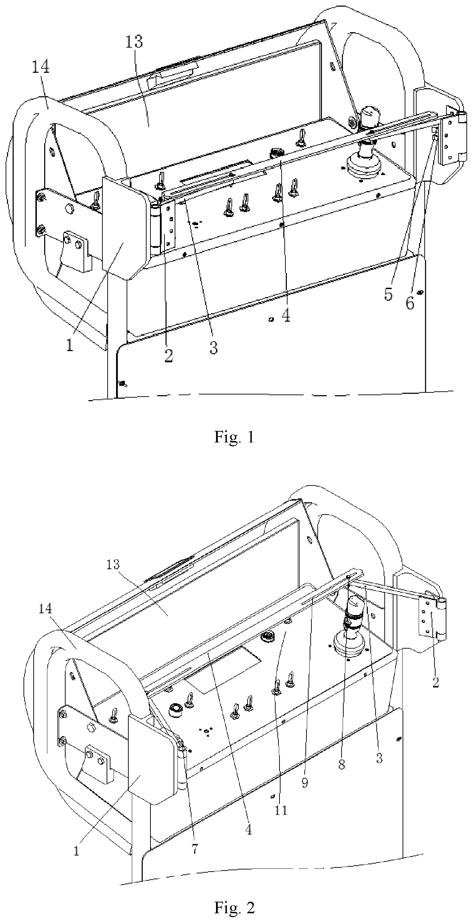

With reference to Figs. 1-7, in the basic implementation, the present invention provides an anti-squeezing device for mobile console, which comprises an opening/closing mechanism pivotally mounted in the area of an operating desktop 13 of the mobile console and is capable of pivotally opening from a closed state in a direction away from the operator in response to the squeezing thrust of the operator, so as to form a dodging space 11; and a position signal detection mechanism mounted to detect and transmit an opening/closing position signal of the opening/closing mechanism, so that a control unit of the mobile console can perform control operations based on the opening/closing position signal.

The anti-squeezing device for mobile console in the present invention has an innovative pivotal opening/closing mechanism, and the opening/closing member of the pivotal opening/closing mechanism is characterized in that one end or side of the opening/closing member is a movable end 12 or movable side. It should be noted here that it is difficult to apply the pivotal opening/closing mechanism in the present invention to anti-squeezing devices for mobile console in the traditional technical vision of those skilled in the art. For those skilled in the art, any member on a mobile console (especially an aerial work machine) should be stable as far as possible. However, the movable end 12 or movable side of the opening/closing member of the pivotal opening/closing mechanism in the present invention belongs to a free end or free side in nature (at least belongs to a movable guide end or movable guide side in the case that a balance connecting member exists). Owing to the existence of such a free end or free side, the opening/closing member of the opening/closing mechanism has certain structural flexibility, which is contrary to the common understanding of those skilled in the art, who strive to make the components of a mobile console stable as far as possible. However, by virtue of the innovative application of the pivotal opening/closing mechanism in the present invention to the squeezing device for mobile console, the long-standing technical problems mentioned in the section Background Art of the present application are solved.

Specifically, the pivotal opening/closing mechanism in the present invention belongs to a push-type mechanism in the form of movement. Thus, when the operator is squeezed and consequently presses and touches the opening/closing member of the opening/closing mechanism, the opening/closing member forms a structural space similar to the case that a door is pushed open, so that the control unit of the anti-squeezing device receives a signal and provides an effective dodging space 11 for the operator while performing anti-squeezing operation. Since the opening/closing member of the pivotal opening/closing mechanism rotates around a hinged pivotal shaft, it actually forms a stress mechanism similar to a lever. In addition, the opening/closing member of the opening/closing mechanism has certain structural flexibility owing to the existence of the free end or free side of the opening/closing member. With such a structural characteristic, the opening/closing member have looser requirements on the force direction, and basically can effectively open and pivot in the direction of the squeezing pressure from the operator under different dangerous conditions, thus provides an dodging space 11 and forms a spatial position change signal. Moreover, in some extreme cases, even if the impact speed is high, the opening/closing member can effectively buffer the pressure of the operator, since the operator impacts the opening/closing member instantly and the opening/closing member has certain flexibility, thus can protect the operator, avoid the injury to the operator caused by the operator's rigid impact on the rigid rod instantaneously in the prior art, and avoid the defect that some rigid rods encroach on the operator's movement space during position change in the prior art. Therefore, the anti-squeezing device for mobile console in the present invention has a wide protection angle range, higher safety and better stability, and can effectively provide a dodging space 11 for the operator while performing anti-squeezing operation.

On the basis of the above-mentioned basic embodiment of the present invention, the position signal detection mechanism may be in a variety of forms, and may employ a single position signal detection element. As a preferred embodiment, the anti-squeezing device for mobile console in the present invention may employ two-level position signal detection. Specifically, the above-mentioned position signal detection mechanism may comprise a warning signal detection device and an operation signal detection device, wherein the warning signal detection device transmits a warning position signal when the opening/closing mechanism moves to a warning position, and the control unit of the mobile console controls an alarm device to give an alarm; the operation signal detection device transmits a dangerous position signal when the opening/closing mechanism further moves to a dangerous position, and the control unit controls the mobile console to brake or move toward a safe direction, e.g., typically move in the reversed direction.

On one hand, such a two-level signal detection scheme can prevent misoperations to a certain extent; specifically, when the operator's body squeezes the opening/closing member to pivot to a warning position, the control unit controls the alarm device to give an alarm to prompt the operator, so that the operator can notice the wrong action in time and correct the action. On the other hand, the two-level signal detection scheme can further improve safety; specifically, if the operator is squeezed and leans forward and downward so that the opening/closing member reaches a dangerous position, the control unit will control the mobile console to brake for deceleration, and even directly control the mobile console to move backward if necessary (control the mobile console to move forward in the reversed direction after the mobile console hits an obstacle in reverse operation), so as to avoid the obstacle hitting from behind; thus, the safety level is higher. That is to say, the anti-squeezing device for mobile console employs two-level signals, in which the signal at the first level is a warning signal, and the signal at the second level is an operation signal for controlling the braking or reversed movement of the mobile console, so that the control unit of the mobile console can make judgments hierarchically on the control operation of the mobile console, thus avoiding affecting the normal operation of the mobile console owing to misoperations, and improving the safety of the anti-squeezing device for mobile console.

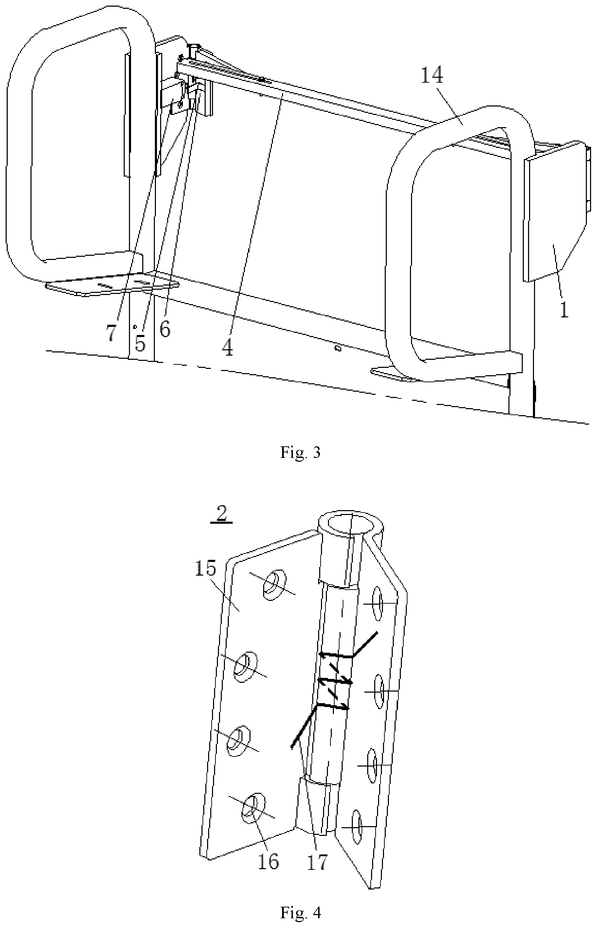

With reference to Figs. 3 and 4. Specifically, the warning signal detection device and the operation signal detection device may comprise a warning signal trigger element 5, an operation signal trigger element 6 and an inductive transmission element 7 for sensing and transmitting an induction signal, wherein the warning signal trigger element 5 and the operation signal trigger element 6 may be mounted on the opening/closing member of the opening/closing mechanism so that they can move along with the opening/closing member, the inductive transmission element 7 may be mounted on the operating desktop 13 or a member around the operating desktop 13 corresponding to the warning signal triggering element 5 and the operating signal triggering element 6, and is electrically connected to the control unit 18 (including wireless electrical connection or wired electrical connection). It should be noted that the mobile console belongs to a mobile working machine or mobile equipment, and its control unit usually belongs to a conventional component of the mobile working machine or mobile equipment. On that basis, the position signal detection mechanism in the present invention is electrically connected to the control unit, and the control unit performs control operation based on the detection signal of the position signal detection mechanism is relatively matured in terms of the implementation of the control technique based the technical concept of the present invention, that scheme. Specifically, the warning signal trigger element 5 and the operation signal trigger element 6 may be one of limit switches, proximity switches, pull switches, contact switches and laser ranging elements, and the inductive transmission element 7 may be a sensor associated to the warning signal trigger element 5 and the operation signal trigger element 6. Such a position detection device may employ a contact detection device or employ a non-contact detection device which is more durable. For example, in the case that the warning signal trigger element 5 and the operation signal trigger element 6 employ proximity switches, the warning signal trigger element 5 and the operation signal trigger element 6 may be metal components for triggering an induction field in the proximity switches, and the inductive transmission element 7 may be an induction field generating component (i.e., a sensing component) that senses the approaching of the metal component in the proximity switches. When the metal component approaches to the induction field generating component, the induction field generating component senses a position signal and transmits the position signal to the control unit, thus serving as the basis for the control unit to exercise control.

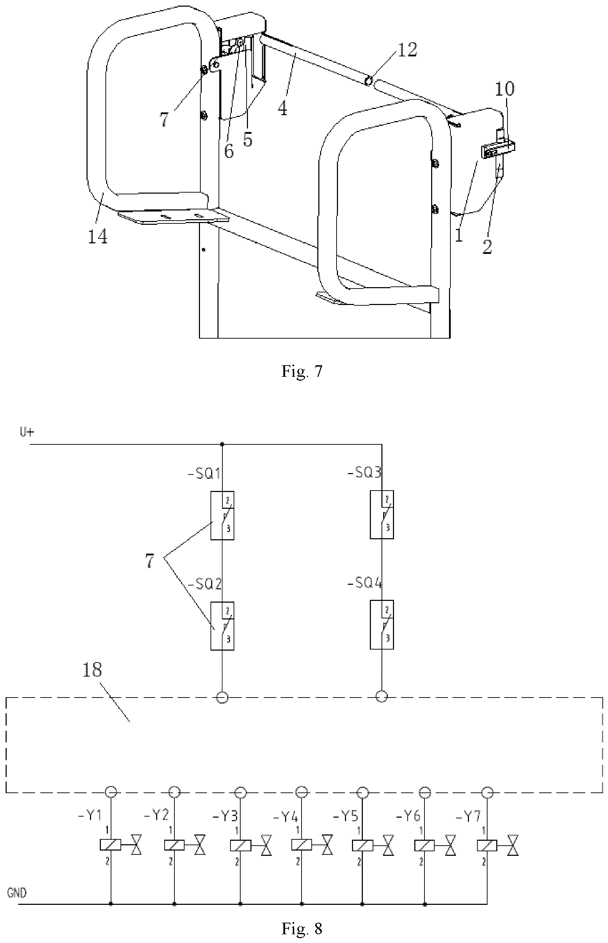

With reference to Fig. 8, which shows a specific form of the position signal detection mechanism of the anti-squeezing device in the present invention. The reference numbers SQ1, SQ2, SQ3 and SQ4 in the figure represent switching signal forming devices (i.e., inductive transmission elements 7) corresponding to the opening/closing members on the two sides of the split opening/closing mechanism, and the control unit performs warning control, or reduces the valve output current, or directly cut off the output current, or outputs current in the reversed direction according to the logic judgment, so as to control the mobile console to decelerate, brake or move toward a safe direction, for example, move in the reversed direction or a deflected direction. Presently, position detection and transmission techniques, such as limit switch, proximity switch, pull switch, contact switch and laser ranging element, etc., are widely applied in various forms, and the circuit connections and applications are relatively matured. No more example of application forms will be further described herein, except the application of the proximity switch mentioned above.

With reference to Figs. 3, 4 and 7. As a more particularly preferred structural form, the anti-squeezing device for mobile console in the present invention may further comprise an elastic damping element 17 mounted corresponding to the opening/closing member of the opening/closing mechanism and preset to have elastic force to keep the opening/closing mechanism in a closed state or reset the opening/closing mechanism to the closed state.

With such an innovative preferred structural form, i.e., an elastic damping element 17 is employed in the anti-squeezing device for mobile console, the technical problems existing in the prior art can be solved more effectively. Specifically, by virtue of the application of the elastic damping element 14, the opening/closing member has certain elasticity at the pivotal axis position, thus opening/closing member has looser requirements on the squeezing stress direction, and basically can effectively open and pivot in all stress directions of the squeezing pressure from the operator subject to different dangerous conditions. Thus, the anti-squeezing device for mobile console has a wider protection angle range, higher safety and better stability, and can provide a dodging space for the operator more effectively while performing anti-squeezing operation.

Besides, owing to the existence of the preset elastic force of the elastic damping element 17, the opening/closing member doesn't pivot easily when touched by the operator by mistake due to the resistance of the elastic force; instead, the operator has to exert certain pressure to overcome the elastic resistance of the elastic damping element 17 to make the opening/closing member pivot, thus accidental misoperations of the operator can be effectively prevented. Accidental misoperations, redundant actions or unintentional actions are usually slight actions. When touching the opening/closing member by mistake, the operator will notice the existence of the elastic resistance in time, and correct the misoperations, redundant actions or unintentional actions in time. Thus, the misoperations of the operator can be prevented essentially, the operating stability of the mobile console can be effectively improved, and the normal construction operation of the mobile console can be ensured. In addition, with the arrangement of the elastic damping element 17, after the operator is settled safely, the opening/closing member of the opening/closing mechanism can automatically reset to the closed state under the action of the elastic force of the elastic damping element 17. Thus, the trouble that the anti-squeezing device in the prior art has to be reinstalled or reset can be effectively avoided. With the anti-squeezing device in the prior art, the safety of the operator can't be guaranteed, owing to the fact that sometimes the maintenance is delayed or the operator doesn't reinstall the anti-squeezing device in time. With the elastic damping element 17 arranged specially, the anti-squeezing device for mobile console in the present invention can further improve the safety and stability of the operator.

The elastic damping element 17 in the present invention may be arranged in various forms, such as torsion spring, spring, elastic rubber, etc. arranged on the pivotal structural member. Specifically, the elastic damping element may be arranged between the fixed side and the movable side of the pivotal structural member or between the fixed side of the pivotal structural member and the opening/closing member. The elastic damping element 17 may be arranged in a variety of structural forms according to the installation conditions, as long as it exerts elastic force on the opening/closing member of the opening/closing mechanism. For example, as shown in Fig. 4, the pivotal structural member of the opening/closing mechanism may be a hinge. In that case, a torsion spring may be sleeved on the middle pivotal pole of the hinge as the elastic damping element 17, with the two ends of the torsion spring respectively abutting against the two opposite pivot pieces of the hinge. As a more convenient preferred structural form, the pivotal structural member of the opening/closing mechanism may employ an elastic hinge 2, in which an elastic member (e.g., a rubber gasket) forms the elastic damping element 17.

Within the scope of the technical concept of the above basic and preferred embodiments of the present invention, the opening/closing mechanism and its opening/closing member of the anti-squeezing device in the present invention may be selected according to the installation requirements. Specifically, the opening/closing mechanism may be a single opening/closing mechanism comprising a single opening/closing member. In that case, one of the left side and right side of the operating desktop 13 is hinged with one end of the opening/closing member, and the other one of the left side and right side of the operating desktop 13 is arranged from the other end of the opening/closing member at spacing that is not enough for the body of the operator to pass through. Generally, the spacing shall ensure that the body of the operator can't pass through the spacing when the operator leans forward, but by body touching the opening/closing member, the opening/closing member is pushed to pivot and change its position . Alternatively, the opening/closing mechanism may be a split opening/closing mechanism comprising a pair of opening/closing members. In that case, the left side and right side of the operating desktop 13 are respectively hinged with the opening/closing members. As for the opening/closing member, it may be a separate member fixed on the pivotal structural member of the opening/closing mechanism, such as a rod fixed on the movable pivotal piece of the hinge. Of course, the opening/closing member may also be directly formed as a part of the pivotal structural member of the opening/closing mechanism, such as a part of the movable pivoting piece of the hinge.

With reference to Figs. 1-3 and 5-7, the opening/closing mechanism preferably employs a split opening/closing mechanism, which is more convenient for the operator to touch the opening/closing member since the operator usually stands right behind the operating desktop 13; besides, the opening/closing members on the two sides are opening/closing members with a movable end 12 respectively, which have better structural flexibility, looser requirements on the pivoting stress direction and better safety. Under the structural condition of a split opening/closing mechanism, the pair of opening/closing members may be directly hinged to the guardrails 14 on the left side and right side of the operating desktop 13. Preferably, mounting brackets 1 may be respectively projected from and fixed on the guardrails 14 on the left side and right side of the operating desktop 13 , so that the opening/closing members can be hinged to the corresponding mounting brackets 1. In such a structural form, the opening/closing members may be mounted at more appropriate positions via the mounting brackets 1, so as to avoid blocking the operator from observing the instruments on the operating desktop 13. Of course, it is also possible to mount mounting brackets 1 which are pivotable on the guardrails 14 on the left side and right side of the operating desktop 13, and the opening/closing members are fixed to or integrated with the corresponding mounting brackets 1 (i.e., the opening/closing member is formed as a part of the mounting bracket 1). In that case, the mounting bracket 1 itself becomes the pivotal structural members, and the installation work can be simplified.

With reference to Figs. 1-7. The opening/closing member may be a main pusher 4. Thus, the present invention provides a pusher-type anti-squeezing device for mobile console that has a simpler structure and is application-specific. The pusher-type anti-squeezing device for mobile console comprises a pusher mechanism and a position signal detection mechanism.The pusher mechanism comprises at least one main pusher 4 pivotally mounted in the area of the operating desktop 13 of the mobile console to have a movable end 12 that can rotate with respect to a pivotal hinge point. And in response to the squeezing thrust of the operator, a pressed section of the main pusher 4 is capable of pivoting from the initial state in a direction away from the operator so as to form a dodging space 11. The position signal detection mechanism is mounted to detect and transmit a pivotal position signal of the main pusher 4, so that a control unit of the mobile console can perform control operations based on the pivotal position signal.

The main pusher 4 of the pivotal pusher mechanism is characterized in that one end or one side of the main pusher is a movable end 12 or movable side. It should be noted here that it is difficult to apply the pivotal pusher mechanism in the present invention to anti-squeezing devices for mobile console in the traditional technical vision of those skilled in the art. For those skilled in the art, any member on a mobile console (especially an aerial work machine) should be stable as far as possible. However, the movable end 12 or movable side of the main pusher 4 of the pivotal pusher mechanism in the present invention belongs to a free end or free side in nature (at least belongs to a movable guide end or movable guide side in the case that a balance connecting member exists). Owing to the existence of such a free end or free side, the main pusher 4 of the pusher mechanism has certain structural flexibility, which is contrary to the common understanding of those skilled in the art, who strive to make the components of a mobile console stable as far as possible. However, by virtue of the innovative application of the pivotal pusher mechanism in the present invention to the squeezing device for mobile console, the long-standing technical problems mentioned in the section Background Art of the present application are solved.

Specifically, when the operator is squeezed and consequently presses and touches the main pusher 4 of the pusher mechanism, the main pusher 4 of the pusher mechanism have certain structural flexibility owing to the existence of the free end or free side of the main pusher 4. With that structural characteristic, the main pusher 4 have looser requirements on the stress direction, and basically can effectively open and pivot in the stress direction of the squeezing pressure from the operator under different dangerous conditions, thus provides an dodging space 11 and forms a spatial position change signal. In addition, in some extreme cases, even if the impact speed is high, the main pusher can effectively buffer the pressure of the operator since the operator impacts the main pusher 4 instantly and the main pusher 4 has certain flexibility, and thus can protect the operator, avoid the harm to the operator caused by the operator's rigid impact on the rigid rod instantaneously in the prior art, and avoid the defect that some rigid rods encroach on the operator's movement space during position change in the prior art.

Likewise, the above-mentioned technical scheme of the elastic damping element 17 and the two-level position signal detection may also be applied to the pusher-type anti-squeezing device for mobile console, and its technical advantages have been described above and will not be detailed further here.

Within the scope of the technical concept of the above basic and preferred embodiments of the present invention, the pusher mechanism and its main pusher of the anti-squeezing device in the present invention may be selected according to the installation requirements.

It should be noted that the pivotal hinge point of the main pusher 4 of the pusher-type anti-squeezing device for mobile console in the present invention may be arranged in an edge area of the operating desktop 13 as required, so as to facilitate the operator to touch the pressed section of the main pusher 4 when being squeezed. The edge area usually may be a side area of the operating desktop 13, but is not limited to that. As required, the edge area may also be a middle edge area of the operating desktop 13. For example, it may be set as required for a mobile console with two or more working positions.

Preferably, the pusher mechanism may be a pusher mechanism comprising a single main pusher 4. In that case, one of the left side and right side of the operating desktop 13 is hinged with one end of the main pusher 4, and the other one of the left side and right side of the operating desktop 13 is arranged from the other end of the main pusher 4 at spacing that is not enough for the body of the operator to pass through. Generally, the spacing shall ensure that the body of the operator can't pass through the spacing when the operator leans forward, but by body touching the main pusher 4, the main pusher 4 is pushed to pivot and change its position. Alternatively, the pusher mechanism may be a split pusher mechanism comprising a pair of main pushers. In that case, the left side and right side of the operating desktop 13 are respectively hinged with the main pushers. As for the main pusher 4, it may be a separate member fixed on the pivotal structural member of the pusher mechanism, such as a rod fixed on the movable pivotal piece of the hinge. Of course, the main pusher may also be directly formed as a part of the pivotal structural member of the pusher mechanism, such as a part of the movable pivoting piece of the hinge.

With reference to Figs. 1-3 and 5-7, the pusher mechanism preferably employs a split pusher mechanism, which is more convenient for the operator to touch the main pusher since the operator usually stands right behind the operating desktop 13; besides, the main pushers on the two sides are main pushers with a movable end 12 respectively, which have better structural flexibility, looser requirements on the pivoting stress direction and better safety. Under the structural condition of a split pusher mechanism, the pair of main pushers may be directly hinged to the guardrails 14 on the left side and right side of the operating desktop 13. Preferably, mounting brackets 1 may be respectively projected from and fixed on the guardrails 14 on the left side and right side of the operating desktop 13, so that the main pushers can be hinged to the corresponding mounting brackets 1. In such a structural form, the main pushers may be mounted at more appropriate positions via the mounting brackets 1, so as to avoid blocking the operator from observing the instruments on the operating desktop 13. Of course, it is also possible to mount mounting bracket 1 which is pivotable on the guardrails 14 on the left side and right side of the operating desktop 13, and the main pushers are fixed to or integrated with the corresponding mounting brackets 1 (i.e., the main pusher is formed as a part of the mounting bracket 1). In that case, the mounting bracket 1 itself becomes the pivotal structural member, and the installation work can be simplified.

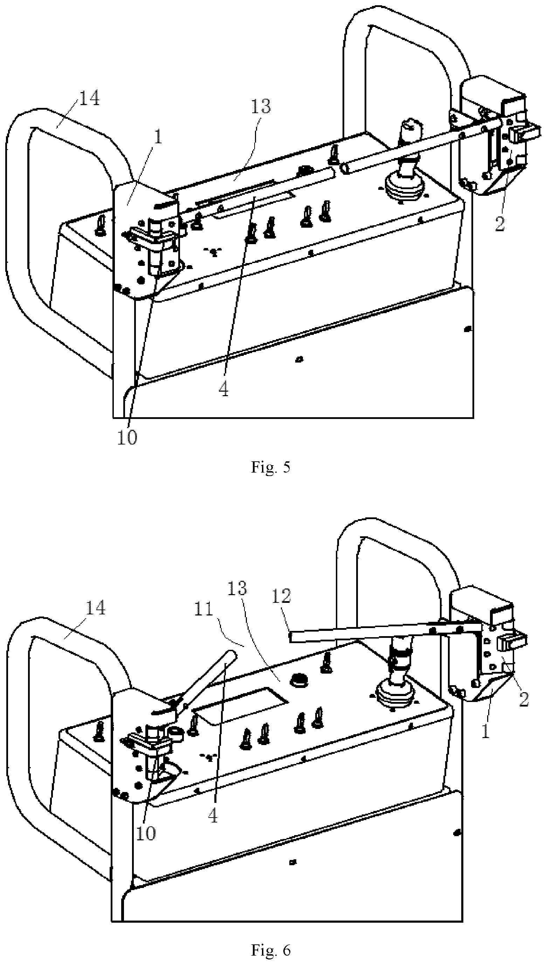

As shown in Figs. 5-7, the end of the main pusher 4 opposite to the hinged end is the above-mentioned movable end 12, and the movable ends 12 of the main pusher 4 on the two sides are opposite to each other when the opening/closing mechanism is in the closed state, wherein the movable ends 12 may be arranged in a way that they are in contact with each other or have spacing therebetween that is not enough for the body of the operator to pass through. In that case, limit stops 10 may be mounted on the two sides of the operating desktop 13 respectively corresponding to the hinged ends of the corresponding main pushers 3, and the limit stops 10 limit the main pushers 4 on the two sides in a closed position in the closed state. Especially, in the above-mentioned case that the elastic damping element 17 is employed, the limit stops 10 can limit the main pushers 4 in the closed position in the closed state and prevent them from being pushed away from the closed position by the elastic force of the elastic damping element 17. The movable ends 12 of the main pushers 4 on the two sides are free ends, and the main pushers have excellent structural flexibility, and have no strict requirement on the direction of stress which cause the main pushers 4 to pivot. In addition, since the main pushers 4 pivot to the left side and right side, the dodging space 11 formed after the main pushers 4 pivot under the pressure is wider, and the safety and stability of the anti-squeezing device in such a structural form are excellent.

As another structural form, as shown in Figs. 1-3, the movable ends 12 of the pair of main pushers 4 on the two sides are opposite to each other when the opening/closing mechanism is in the closed state, a balance guide pusher 3 may be connected between the movable ends 12, and the left and right sections of the balance guide pusher 3 may be respectively formed with a movable guide structure, the movable ends 12 may be slidably connected to the corresponding movable guide structures, and the movable guide structures may be in various forms, such as dovetail grooves associated with trapezoidal blocks. The left and right sections of the balance guide pusher 3 in the figure are respectively formed with a sliding groove 9 in the length direction, and the movable ends 12 are slidably connected to the corresponding sliding grooves 9 via sliding pin connection assemblies 8, wherein the movable ends 12 of the pair of main pushers 4 on the two sides are at one end of the sliding grooves 9 near the center of the balance guide pusher 3 so as to define the closed position of the main pushers 4 and the movable ends 12 may slide toward the other end of the sliding grooves 9 in the opening process. In that structural form, a sliding connection is formed between the balance guide pusher 3 and the movable ends 12 of the main pushers 4 on the two sides. Thus, the structural flexibility is good, and a dodging space 11 can also be formed in the open state. Moreover, since a balance guide pusher 3 is employed, the movable ends 12 of the main pushers 4 on the two sides are constrained to a certain extent, and the structural stability of the anti-squeezing device is good.

Although Figs. 1-7 show that the pivot axis of the opening/closing mechanism (specifically a pusher mechanism) of the anti-squeezing device in the present invention is a vertical axis. However, the pivot axis of the opening/closing mechanism may be a vertical axis, a horizontal axis, or an axis having an included angle with a horizontal plane, which may be determined according to the actual installation situation, within the scope of the technical concept of the present invention. All of those schemes should be deemed as falling in the scope of protection of the present invention. The pivotal structural member of the opening/closing mechanism may be a hinge or a ball-head hinge, etc. That is to say, the moving direction of the opening/closing mechanism when pushed open is not limited to the horizontal plane; rather, the moving direction may be horizontal direction or vertical direction, wherein the horizontal direction refers to the direction within ±60° range toward the operating desktop 13, the opening/closing mechanism may be stressed in multiple directions (the operator may trigger the opening/closing mechanism from multiple directions when he/she is squeezed), and the vertical direction refers to the direction toward the floor of the operation, and, to that end, the elastic hinge 2 may be rotated by 90° simply. It should be noted: in the case that an elastic hinge is used, whether in the horizontal direction or the vertical direction, the elastic hinge will be bumped (more severely in the vertical direction). Therefore, it is necessary to limit the triggering angle, so as to avoid triggering the warning signal trigger element 5 during transportation.

On the basis of the technical scheme of the above-mentioned anti-squeezing device for mobile console, the present invention further provides an aerial work machine, which comprises the anti-squeezing device for mobile console or the pusher-type anti-squeezing device for mobile console according to any of the above technical schemes.

The basic embodiment and various preferred embodiments of the anti-squeezing device in the present invention have been described above progressively. In order to facilitate understanding the technical concept and advantages of the anti-squeezing device in the present invention more deeply, hereunder two structural forms of the anti-squeezing device with relatively comprehensive preferred features will be described with reference to Figs. 1-7.

As shown in Figs. 1-4, the illustrated anti-squeezing device employs a structural form in which main pushers 4 are arranged on the two sides and a balance guide pusher 3 is connected between the movable ends 12 of the main pushers 4, wherein the mounting bracket 1 is mounted or welded on guardrail 14 and extends about 120mm horizontally from the operating desktop 13 toward the operator, so as to reflect the squeezing condition of the operator in time. The mounting bracket 1 may be fixedly mounted or movably connected in an adjustable form (e.g., connected by mounting bolts inserted through kidney slots). The pivotal structure of the main pusher 4 employs an elastic hinge 2, which can automatically reset and apply a preload to keep the opening/closing mechanism in a closed state. Such an elastic hinge 1 may be a standard part (e.g., disc spring or spring) or a tailor-made part. The elastic hinge 2 shown in Fig. 4 is a tailor-made part with a structure similar to a spring hinge, and is mounted on the guardrail 14 or the mounting bracket 1. The movable pivotal piece of the elastic hinge 2 is connected with the main pusher 4 (the movable pivotal piece has a mounting hole and is connected by a bolt). The elastic hinge 2 may be mounted vertically or obliquely, as long as it is convenient for the operator to push the pusher when the operator is squeezed. The main pusher 4 may be made of a metal or plastic material, etc. One end of the main pusher 4 is connected to the elastic hinge 2, and the other end of the main pusher 4 is connected to the balance guide pusher 3 via a sliding pin connection assembly 8, and can slide along a sliding groove 9 of the balance guide pusher 3. That is to say, the movable range of the main pusher 4 is limited by the length of the sliding groove 9, and the length of the sliding groove may be determined according to the actual situation. Of course, the sliding pin connection assembly 8 and the elongated sliding groove 9 may be replaced with a pulley and a dovetail groove/wedge groove. As for the electrical system, it comprises a warning signal trigger element 5, an operation signal trigger element 6 and an inductive transmission element 7. When the main pusher 4 moves to a certain angle, the warning signal trigger element 5 is triggered, so that the inductive transmission element 7 generates a warning signal. When main pusher 4 moves to a greater angle, the operation signal trigger element 6 is triggered, and a braking signal or reverse movement signal is transmitted to the control unit via the inductive transmission element 7. The function of the warning signal trigger element 5 and the operation signal trigger element 6 is to send signals in different stages to the control unit according to different squeezing conditions. The signal system employs a two-level signal system, which can effectively prevent misoperations, and can warn the operator and further decelerate when the operator leans downward and forward to the operating desktop 13. Thus, the safety level is higher. The signal detection devices for realizing the above functions may be limit switches, proximity switches, laser ranging elements, or similar components. In the figure, two limit switches (which play the roles of warning and operation respectively) are employed and may be arranged around the elastic hinge 2.

In the application process, when the operator is squeezed, his/her body will push the balance guide pusher 3, which will drive the main pushers 4 via the sliding groove 9 and the sliding pin connection assembly 8 to make the elastic hinge 2 rotate. When the elastic hinge 2 rotates to appropriate angles, the warning signal trigger element 5 and the operation signal trigger element 6 will trigger the inductive transmission element 7 respectively, and the control unit will send a warning signal or perform braking and deceleration control or reverse movement operation. In a non-working state, the balance guide pusher 3 and the main pusher 4 are kept in a linear closed state shown in the figure under the action of the elastic hinge 2, the inductive transmission element 7 is standby, and no signal is sent out.

The structural form of the anti-squeezing device shown in Figs. 5-7 is essentially the same as that shown in Figs. 1-3, with the following difference: separate main pushers 4 and limit stops 10 are employed on the left side and right side to push the elastic hinge 2. When the operator is squeezed, his/her body pushes the main pusher 4 to drive the elastic hinge 2 to rotate. When the elastic hinge 2 rotates to appropriate angles, the warning signal trigger element 5 and the operation signal trigger element 6 respectively trigger the inductive transmission element 7, and the control unit sends a warning signal or performs braking and deceleration control or reverse movement operation. When the operator is not squeezed, the main pusher 4 and the elastic hinge 2 are limited by the limit stop 10 in the linear closed state shown in the figure, the inductive transmission element 7 is standby, and no signal is sent out. With the anti-squeezing device with the preferred structure shown in Figs. 5-7, there is no obstruction in front of the main pusher 4. Therefore, the dodging space 12 for the operator is greater, the stress direction range of the main pusher 4 is wider, and the safety and stability are higher.

It is seen from the above description of the present invention: the anti-squeezing device for mobile console in the present invention has an innovative pivotal opening/closing mechanism, and the opening/closing member of the pivotal opening/closing mechanism is characterized in that one end or one side of the opening/closing member is a movable end or movable side. Owing to the fact that the movable end or movable side of the opening/closing member of the pivotal opening/closing mechanism in the present invention is a free end or free side in nature (at least belongs to a movable guide end or movable guide side in the case that a balance connecting member exists). Owing to the existence of such a free end or free side, the opening/closing member of the opening/closing mechanism has certain structural flexibility. By virtue of the innovative application of the pivotal opening/closing mechanism in the present invention in the anti-squeezing device for mobile console, the above-mentioned long-standing technical problems in the art are solved. Specifically, the pivotal opening/closing mechanism in the present invention belongs to a push-type mechanism in the form of movement. Thus, when the operator is squeezed and consequently presses and touches the opening/closing member of the opening/closing mechanism, the opening/closing member will form a structural space similar to the case that a door is pushed open, so that the control unit of the anti-squeezing device receives a signal and performs anti-squeezing operation, while providing an effective dodging space 11 for the operator. Since the opening/closing member of the pivotal opening/closing mechanism rotates around a hinged pivotal shaft, it actually forms a stress mechanism similar to a lever. In addition, the opening/closing member of the opening/closing mechanism has certain structural flexibility owing to the existence of the free end or free side of the opening/closing member. With such a structural characteristic, the opening/closing member has looser requirements for the stress direction, and basically can effectively open and pivot in the stress direction of the squeezing pressure from the operator under different dangerous conditions, thus provides a dodging space 11 and forms a spatial position change signal.

Especially, the pusher-type anti-squeezing device for mobile console in the present invention employs a pivotal pusher mechanism, and the main pusher of the pivotal pusher mechanism is characterized in that one end or one side of the main pusher is a movable end or movable side. Owing to the fact that the movable end or movable side of the main pusher of the pivotal pusher mechanism in the present invention is a free end or free side in nature (at least belongs to a movable guide end or movable guide side in the case that a balance connecting member exists), the main pusher of the pusher mechanism has certain structural flexibility thanks to the existence of such a free end or free side. By virtue of the innovative application of the pivotal pusher mechanism in the present invention in the anti-squeezing device for mobile console, the above-mentioned long-standing technical problems in the art are solved. Specifically, when the operator is squeezed and consequently presses and touches the main pusher 4 of the pusher mechanism, the main pusher 4 of the pusher mechanism have certain structural flexibility owing to the existence of the free end or free side of the main pusher 4. With such a structural characteristic, the main pusher has looser requirements on the stress direction, and basically can effectively open and pivot in the stress direction of the squeezing pressure from the operator under different dangerous conditions, thus provides a dodging space 11 and forms a spatial position change signal. In some extreme cases, even if the impact speed is high, the main pusher 4 can effectively buffer the pressure of the operator since the operator impacts the main pusher instantly and the main pusher 4 has certain flexibility. Thus, the anti-squeezing device can protect the operator, avoid the harm to the operator caused by the operator's rigid impact on the rigid rod instantaneously in the prior art, and avoid the defect that some rigid rods encroach on the operator's movement space during position change in the prior art. Therefore, the anti-squeezing device for mobile console in the present invention has a great protection angle range, higher safety and better stability, and can effectively provide a dodging space for the operator while performing anti-squeezing operation.

In addition, in a preferred technical scheme of the anti-squeezing device for mobile console in the present invention, the anti-squeezing device for mobile console employs two-level signals, in which the signal at the first level is a warning signal, and the signal at the second level is an operation signal for controlling the braking or reversed movement of the mobile console, so that the control unit of the mobile console can make judgments hierarchically on the control operation of the mobile console, thus avoiding affecting the normal operation of the mobile console owing to misoperations.

Especially, in a more innovative preferred technical scheme of the present invention, the anti-squeezing device for mobile console in the present invention employs an elastic damping element 17. With such an elastic damping element 17 (especially an elastic hinge 2), the opening/closing member or the main pusher also have elasticity at the pivotal axis position. Thus, the requirement of the opening/closing member on the stress direction is looser. Basically the opening/closing member can effectively open and pivot in all stress directions under the squeezing pressure of the operator under different dangerous conditions; besides, owing to existence of the preset elastic force of the elastic damping element 17, the opening/closing member or the main pusher will not pivot easily against the resistance of the elastic force in a case that the operator touches the opening/closing member or the main pusher by mistake; instead, the operator has to exert certain pressure to overcome the elastic resistance of the elastic damping element so as to make the opening/closing member or the main pusher to pivot. Such a technical scheme can effectively prevent accidental misoperations of the operator. Accidental misoperations, redundant actions and unintentional actions are basically slight ones. When the operator touches the opening/closing member or the main pusher by mistake, he/she will feel the existence of the elastic resistance in time, thus correct his/her misoperations, redundant actions or unintentional actions in time. In that way, the misoperations of the operator can be prevented basically, the operating stability of the mobile console is effectively improved, and the normal operation of the mobile console is ensured. In addition, with the arrangement of the elastic damping element 17, after the operater is safe, the opening/closing member or the main pusher can automatically reset to the closed state under the action of the elastic force of the elastic damping element 17. Thus, the trouble that the anti-squeezing device in the prior art has to be reinstalled or reset can be effectively avoided. With the anti-squeezing device in the prior art, the safety of the operator can't be guaranteed, owing to the fact that sometimes the maintenance is delayed or the operator doesn't reinstall the anti-squeezing device in time.

While some preferred embodiments of the present invention are described above with reference to the accompanying drawings, the present invention is not limited to the details in those embodiments. Those skilled in the art can make modifications and variations to the technical scheme of the present invention, without departing from the spirit of the present invention. However, all these modifications and variations shall be deemed as falling into the scope of protection of the present invention. In addition, it should be noted that the specific technical features described in above embodiments may be combined in any appropriate form, provided that there is no conflict. To avoid unnecessary repetition, the possible combinations are not described specifically in the present invention.

Moreover, different embodiments of the present disclosure may also be combined freely as required, as long as the combinations don't deviate from the ideal and spirit of the present disclosure. However, such combinations shall also be deemed as falling into the scope disclosed in the present disclosure.

## Claims

1. An anti-squeezing device for mobile console, comprising:
an opening/closing mechanism pivotally mounted in the area of an operating desktop (13) of the mobile console and capable of pivotally opening from a closed state in a direction away from the operator in response to the squeezing thrust of the operator so as to form a dodging space (11); and
a position signal detection mechanism mounted to detect and transmit an opening/closing position signal of the opening/closing mechanism, so that a control unit (18) of the mobile console may perform control operations based on the opening/closing position signal.

2. The anti-squeezing device for mobile console as claim 1, wherein
the opening/closing mechanism is a single opening/closing mechanism comprising a single opening/closing member, one of the left side and right side of the operating desktop (13) is hinged with one end of the opening/closing member, the other one of the left side and right side of the operating desktop (13) is arranged from the other end of the opening/closing member at a spacing that is not enough for the body of the operator to pass through; or
the opening/closing mechanism is a split opening/closing mechanism comprising a pair of opening/closing members, and the left side and right side of the operating desktop (13) are respectively hinged with the opening/closing member.

3. The anti-squeezing device for mobile console as claim 2, wherein the opening/closing member is a separate member fixed on a pivotal structural member of the opening/closing mechanism; or the opening/closing member is formed as a part of a pivotal structural member of the opening/closing mechanism.

4. The anti-squeezing device for mobile console as claim 2, wherein the opening/closing mechanism is the split opening/closing mechanism, wherein
the pair of the opening/closing members are correspondingly hinged on guardrails (14) on the left side and right side of the operating desktop (13); or
a mounting bracket (1) is projected and fixed on the respective guardrail (14) on the left side and right side of the operating desktop (13), and the opening/closing members are hinged to the corresponding mounting brackets (1); or
a mounting bracket (1) which is pivotable is mounted on the respective guardrail (14) on the left side and right side of the operating desktop (13), and the opening/closing members are fixed to or integrated with the corresponding mounting brackets (1).

5. The anti-squeezing device for mobile console as claims 1-4, wherein the pivot axis of the opening/closing mechanism is a vertical axis, a horizontal axis or an axis having an included angle with the horizontal plane.

6. The anti-squeezing device for mobile console as claims 1-4, wherein the position signal detection mechanism comprises a warning signal detection device and an operation signal detection device, wherein
the warning signal detection device transmits a warning position signal when the opening/closing mechanism moves to a warning position, and the control unit (18) controls an alarm device to give an alarm; and
the operation signal detection device transmits a dangerous position signal when the opening/closing mechanism further moves to a dangerous position, and the control unit (18) controls the mobile console to brake or move toward a safe direction.

7. The anti-squeezing device for mobile console as claim 6, wherein the warning signal detection device and the operation signal detection device comprise a warning signal trigger element (5), an operation signal trigger element (6) and an inductive transmission element (7) for sensing and transmitting an induction signal, wherein the warning signal trigger element (5) and the operation signal trigger element (6) are mounted on the opening/closing member of the opening/closing mechanism so that they can move along with the opening/closing member, the inductive transmission element (7) is mounted on the operating desktop (13) or a member connected around the operating desktop (13) corresponding to the warning signal triggering element (5) and the operating signal triggering element (6) and is electrically connected to the control unit (18).

8. The anti-squeezing device for mobile console as claims 1-4, further comprising an elastic damping element (17) mounted corresponding to the opening/closing member of the opening/closing mechanism and preset to have elastic force to keep the opening/closing mechanism in a closed state or reset the opening/closing mechanism to the closed state.

9. A pusher-type anti-squeezing device for mobile console, comprising:
a pusher mechanism comprising at least one main pusher (4) that is pivotally mounted in the area of an operating desktop (13) of the mobile console to have a movable end (12) rotatable with respect to a pivotal hinge point, and the main pusher (4) is capable of driving a pressed section of the main pusher (4) to pivot from an initial state in a direction away from the operator in response to the squeezing thrust of the operator so as to form a dodging space (11); and
a position signal detection mechanism mounted to detect and transmit a pivotal position signal of the main pusher (4), so that a control unit (18) of the mobile console may perform control operations based on the pivotal position signal.

10. The pusher-type anti-squeezing device for mobile console as claim 9, wherein the main pusher (4) is a separate member fixed on a pivotal structural member of the pusher mechanism; or the main pusher (4) is formed as a part of a pivotal structural member of the pusher mechanism.

11. The pusher-type anti-squeezing device for mobile console as claim 9, wherein the pivotal hinge point of the main pusher (4) is arranged in an edge area of the area of the operating desktop (13), so as to facilitate the operator to touch the pressed section of the main pusher (4) when being squeezed.

12. The pusher-type anti-squeezing device for mobile console as claim 11, wherein
the pusher mechanism comprises a single main pusher (4), one of the left side and right side of the operating desktop (13) is hinged with one end of the main pusher (4), and the other one of the left side and right side of the operating desktop (13) is arranged from the other end of the main pusher (4) at a spacing that is not enough for the body of the operator to pass through; or
the pusher mechanism comprises a pair of main pushers (4), and the left side and right side of the operating desktop (13) are respectively hinged with the main pushers (4).

13. The pusher-type anti-squeezing device for mobile console as claim 12, wherein the pusher mechanism comprises a pair of main pushers (4), wherein
the pair of the main pushers (4) are correspondingly hinged on guardrails (14) on the left side and right side of the operating desktop (13); or
a mounting bracket (1) is projected and fixed on the respective guardrails (14) on the left side and right side of the operating desktop (13), and the main pushers (4) are hinged to the corresponding mounting brackets (1); or
a mounting bracket (1) which is pivotable is mounted on the respective guardrails (14) on the left side and right side of the operating desktop (13), and the main pushers (4) are fixed to or integrated with the corresponding mounting brackets (1).

14. The pusher-type anti-squeezing device for mobile console as claim 13, wherein the movable ends (12) of the pair of main pushers on the two sides are opposite to each other in the initial state, wherein the movable ends (12) are arranged as follows: the movable ends (12) are in contact with each other or have a spacing that is not enough for the body of the operator to pass through therebetween; or a balance guide pusher (3) is connected between the movable ends (12) of the main pushers, the left and right sections of the balance guide pusher (3) are respectively provided with a movable guide structure, and the movable ends (12) are slidably connected with the corresponding movable guide structures.

15. The pusher-type anti-squeezing device for mobile console as claim 14, wherein
the movable ends (12) are arranged to be in contact with each other or have a spacing that is not enough for the body of the operator to pass through therebetween, the two sides of the operating desktop (13) are respectively provided with a limit stop (10) corresponding to the hinged end of the corresponding main pusher (3), and the limit stops (10) limit the movable ends of the main pushers (4) on the two sides in opposite positions in the initial state; or
the movable ends (12) of the main pushers are connected therebetween with the balance guide pusher (3), and the movable guiding structure of the left and right sections of the balance guide pusher (3) is a sliding groove (9) in the length direction, the movable end (12) is slidably connected with the corresponding sliding groove (9) via a sliding pin connection assembly (8), the movable ends (12) of the pair of main pushers (4) on the two sides are at the ends of the corresponding sliding grooves (9) that are near the center of the balance guide pusher (3) so as to limit the initial positions of the main pushers (4) and can slide toward the other ends of the corresponding sliding grooves (9) in the opening process.

16. The pusher-type anti-squeezing device for mobile console as claims 9-15, wherein the pivot axis of the pusher mechanism is a vertical axis, a horizontal axis or an axis having an included angle with the horizontal plane.

17. The pusher-type anti-squeezing device for mobile console as claims 9-15, wherein the position signal detection mechanism comprises a warning signal detection device and an operation signal detection device, wherein,
the warning signal detection device transmits a warning position signal when the main pusher (4) pivots to a warning position, and the control unit (18) controls an alarm device to give an alarm; and
the operation signal detection device transmits a dangerous position signal when the main pusher (4) further moves to a dangerous position, and the control unit (18) controls the mobile console to brake or move toward a safe direction.

18. The pusher-type anti-squeezing device for mobile console as claim 17, wherein the warning signal detection device and the operation signal detection device comprise a warning signal trigger element (5), an operation signal trigger element (6) and an inductive transmission element (7) for sensing and transmitting an induction signal, wherein the warning signal trigger element (5) and the operation signal trigger element (6) are mounted on the main pusher (4) so that they can move along with the main pusher, the inductive transmission element (7) is mounted on the operating desktop (13) or a member connected around the operating desktop (13) corresponding to the warning signal triggering element (5) and the operating signal triggering element (6) and is electrically connected to the control unit (18).

19. The pusher-type anti-squeezing device for mobile console as claim 18, wherein the warning signal trigger element (5) and the operation signal trigger element (6) are one of limit switches, proximity switches, pull switches, contact switches and laser ranging elements, and the inductive transmission element (7) is a sensor associated to the warning signal trigger element (5) and the operation signal trigger element (6).

20. The pusher-type anti-squeezing device for mobile console as claims 9-15, further comprising an elastic damping element (17) mounted corresponding to the main pusher (4) and preset to have elastic force to keep the main pusher (4) in the initial state or reset the main pusher (4) to the initial state.

21. The pusher-type anti-squeezing device for mobile console as claim 20, wherein the pivotal structural member of the pusher mechanism is an elastic hinge (2), an elastic member of the elastic hinge (2) forms the elastic damping element (17); or
the elastic damping element (17) is a torsion spring, spring or elastic rubber arranged on the pivotal structural member.

22. An aerial work machine, comprising the anti-squeezing device for mobile console as claims 1-8 or the pusher-type anti-squeezing device for mobile console as claims 9-21.
